# EUROPEAN PATENT SPECIFICATION

(11) **EP 3 431 345 B1**
(45) Date of publication and mention of the grant of the patent: **01.04.2020**
(21) Application number: 18184361.6
(22) Date of filing: 19.07.2018
(51) Int. Cl.: B60R 21/02, B62D 21/15, B60J 5/04

(54) **IMPACT ENERGY ABSORBER FOR A VEHICLE**
AUFPRALLENERGIEABSORBER FÜR EIN FAHRZEUG
ABSORBEUR D'ÉNERGIE D'IMPACT POUR VÉHICULE

(30) Priority: 20.07.2017 IN 201721025868
(43) Date of publication of application: 23.01.2019
(73) Proprietor: Faurecia Interior Systems India Pvt. Ltd., 411026 Pune (IN)
(72) Inventor: BHALGAT, Omkar, 413102 BARAMATI (IN); SIDDIQUI, Firoz, 411018 PUNE (IN)
(74) Representative: Lavoix

(56) References cited:
- WO-A1-2004/056639
- JP-A- 2004 249 807
- JP-A- 2013 217 414
- JP-A- 2015 199 405
- US-A1- 2007 210 615

## Description

### Field of the Invention

The present invention relates to an energy impact absorber. More specifically, the present invention relates to an impact energy absorber for absorbing an impact energy on a vehicle.

### Background of the Invention

Crash pads inside the vehicles are used for absorbing collision energy during a crash. These crash pads protect an occupant inside the vehicle by absorbing impact energy caused by external impact load on the vehicle during crash. However the crash pads known in the arts are traditionally designed to protect the occupant in a certain crash test scenario. Generally, the crash pads are made of foams or blow moulded or injection moulded crush cones are used inside the vehicle as crash pads. In contrast to a real vehicle crash as an impact load by an unexpected vehicle crash makes it difficult to predict a position and direction of the impact applied to the crash pads. Consequently, in a real vehicle crash or an offset crash, the crash pads often fails, as the impact of collision is not on the predicted zones and the occupant sustain injuries.

Patent document WO 2004/056639 A1 discloses: an impact energy absorber for absorbing an impact energy on a vehicle, the impact energy absorber comprising: a first part having a first outer surface and a second outer surface; a second part having a third outer surface and a fourth outer surface, and the first part and the second part are adjoined such that the second outer surface and third outer surface are facing each other; wherein at least a first rib element extends parallel to an impact line from the second outer surface in the direction of the third outer surface along an impact line, and at least one second rib element extending from the third outer surface in the direction of the second outer surface such that the second rib element is in line with the first rib element and wherein, in an undeformed condition, the first rib element and the second rib element are having a distance.

Therefore, there is a need to provide an improved crash pads for absorbing impact energy, which overcomes few or all of the drawbacks of the existing crash pads.

### Objects of the Invention

An object of the present invention is to provide an impact energy absorber for absorbing impact energy during collision of vehicle.

Another object of the present invention is to provide an impact energy absorber, which can protect an occupant during vehicle crashes.

Yet another object of the present invention is to provide an impact energy absorber, which can absorb the crash force even in offset force.

Still another object of the present invention is to provide an impact energy absorber, which is easy to manufacture and simple in construction.

One more object of the present invention is to provide an impact energy absorber, which is robust in construction.

### Summary of the invention

According to the present invention, an impact energy absorber for absorbing an impact energy on a vehicle according to claim 1 is provided. The impact energy absorber is configured inside the vehicle such as in the door or the like in different orientations and height. The impact energy absorber comprises a first wedge shaped part having a first outer surface and a second outer surface. The impact energy absorber further comprises a second wedge shaped part having a third outer surface and a fourth outer surface. The first wedge shaped part and the second wedge shaped part are adjoined to form a wedge shaped opening between the second outer surface and the third outer surface such that the second outer surface and the third outer surface are facing each other.

A first rib element and a second rib element are arranged in the wedge shaped opening. The first rib element extends parallel to an impact line from the second outer surface in the direction of the third outer surface. The second rib element extends from the third outer surface in the direction the second outer surface such that the first rib element and the second rib element are in line with each other. In line means that the first rib element and the second rib element extend in at least one direction along a joint line or plane in order to assure that, on impact, the first rib element and the second element engage or merge. In an undeformed condition, so before an impact, the first rib element and the second rib element are having a distance. After an impact, so in the deformed condition, the first rib element and the second rib element engage or merge with each other and deform. The impact line defines the direction along which the impact energy absorber absorbs the impact energy.

Particularly, a plurality of first rib elements are configured on the second outer surface and a plurality of second rib elements are configured on the third outer surface such that the rib elements extend parallel to the impact line. The plurality of first rib elements are arranged parallelly to each other and are distanced to one another. Similarly, the plurality of second rib elements are arranged parallelly to each other and are distanced to one another. More in particular, the plurality of the first rib elements and the plurality of the second rib elements are arranged relative to each other such that for an individual set of first rib element and a corresponding second rib element are arranged in line.

In an embodiment of the impact energy absorber, the first wedge shaped part and the second wedge shaped part are having a first hollow portion and a second hollow portion respectively. The first hollow portion is at one side confined by a first inner surface, wherein the first inner surface is opposite to the first outer surface. At another side the first hollow portion is confined by a second inner surface, in which the second inner surface is opposite to the second outer surface. The first hollow portion of the first wedge shaped part is provided with a plurality of lamellas. The lamellas are plate like structures arranged parallel to the impact line and parallel to each other and extending from the first inner surface to the second inner surface. Similarly, the second hollow portion of the second wedge shaped part is provided with a plurality of lamellas arranged parallel to the impact line and parallel to each other and extending perpendicularly from the third inner surface to the fourth inner surface.

In another embodiment, a lamella is arranged on each of two opposite sides of the wedge shaped opening constituting a side wall for the wedge shaped opening. Both side walls extend in a direction parallel to the impact line. The lamellas may adjoin with the second outer surface and the third outer surface. Each of the lamellas may also be an extension of the side walls of the two wedge shaped parts, forming a joint side wall for both wedge parts.

In an undeformed condition the first rib element and the second rib element are having a distance therebetween. In a deformed condition the first rib element and the second rib element engages with one another and deform and eventually merge thereafter depending upon force of impact. Specifically, the first rib element and the second rib element engage with one another in a deformed condition and the complementary end surfaces of the first rib element and the second rib element meet with a positive fit.

### Brief Description of the Drawings

The advantages and features of the present invention will be understood better with reference to the following detailed description of some embodiments of the impact energy absorber and claims taken in conjunction with the accompanying drawings, wherein like elements are identified with like symbols, and in which:
Figure 1 illustrates a perspective view of an impact energy absorber for absorbing energy impact during collision of vehicle in accordance with the present invention;
Figure 2 illustrates another perspective view of the embodiment of figure 1;
Figure 3 illustrates a sectional view of figure 1;
Figure 4 illustrates an embodiment of the impact energy absorber;
Figure 5 illustrates another view of the embodiment of figure 4;
Figure 6 illustrates the impact energy absorber in deformed condition in accordance with the present invention; and
Figure 7 illustrates another view of the impact energy absorber in deformed condition of figure 6.

### Detailed Description of the Invention

An embodiment of this invention, illustrating its features, will now be described in detail. The words "comprising, "having, "containing," and "including," and other forms thereof, are intended to be equivalent in meaning and be open ended in that an item or items following any one of these words is not meant to be an exhaustive listing of such item or items, or meant to be limited to only the listed item or items.

The terms "first," "second," and the like, herein do not denote any order, quantity, or importance, but rather are used to distinguish one element from another, and the terms "an" and "a" herein do not denote a limitation of quantity, but rather denote the presence of at least one of the referenced item.

The present invention is to provide an impact energy absorber for absorbing impact energy during collision of vehicles. The impact energy absorber can protect an occupant during vehicle crashes. Further, the impact energy absorber can absorb the crash force even in offset force, so when the impact is not in the middle of the absorber. Moreover, the impact energy absorber is easy to manufacture and simple in construction. Also, the impact energy absorber is robust in construction.

The disclosed embodiments are merely exemplary of the invention, which may be embodied in various forms.

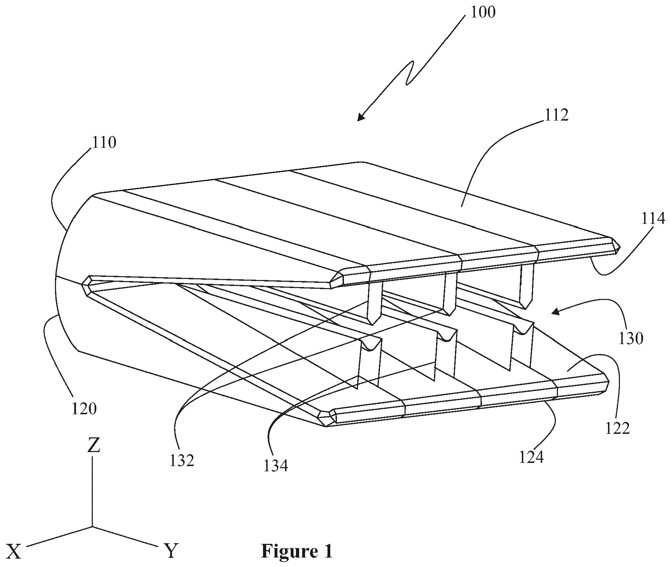

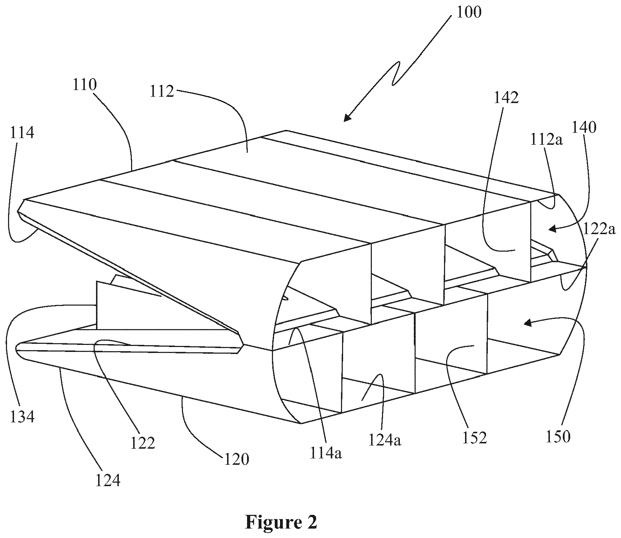

Referring now to figure 1 and 2, an impact energy absorber 100 for absorbing impact energy during collision of vehicles in accordance with the present invention is illustrated. The impact energy absorber 100 is configured inside a vehicle body such as in the door or the like in different orientations and height. It may be obvious to a person skilled in the art to configure the impact energy absorber 100 anywhere inside or outside the vehicle for absorbing the impact force on collision of the vehicle.

The impact energy absorber 100 comprises a first wedge shaped part 110 and a second wedge shaped part 120. The first wedge shaped part 110 having a first outer surface 112 and a second outer surface 114. Similarly, the second wedge shaped part 120 is having a third outer surface 122 and a fourth outer surface 124. The first wedge shaped part 110 and the second wedge shaped part 120 are adjoined together to form a wedge shaped opening 130 between the second outer surface 114 and the third outer surface 122. The first outer surface 112 is parallel to the fourth outer surface 124. More in particular the first outer surface 112 and the fourth outer surface 124 may lie in an x-y plane. This x-y plane is perpendicular to an impact line that extends in the z-direction. The impact line defines the direction along which the impact energy absorber 100 absorbs the impact energy. In the present embodiment, the first wedge shaped part 110 and the second wedge shaped part 120 are hollow like first hollow portions 140 and second hollow portions 150 respectively. The impact energy absorber 100 may have a surface area in the x-y plane that is for example 20 cm by 20 cm and a thickness in z direction that is for example 7 cm.

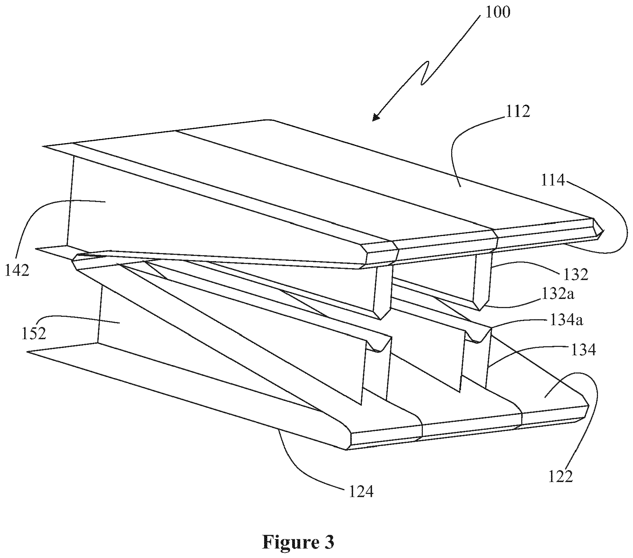

Further, referring to figure 1, the wedge shaped opening 130 is having at least a first rib element 132 and at least a second rib element 134 configured with a distance therebetween. The first rib element 132 is extended parallel to the impact line from the second outer surface 114 in the direction of the third outer surface 122. The second rib element 134 is extended from the third outer surface 122 in the direction of the second outer surface 114. More in particular, the first rib element 132 and the second rib element 134 are arranged in line with each other so that on impact, the first rib element 132 and the second rib element 134 will move towards each other. In line means that the first rib element 132 and the second rib element 134 extend in at least one direction along a joint line or plane in order to assure that, on impact, the first rib element 132 and the second rib element 134 engage or merge. The first rib element 132 is having an end surface 132a complementary to an end surface 134a of the second rib element 134. Such a complementary shape is advantageous in comparison to just flat end surfaces because it allows a better engaging of the ribs during impact. The first rib element 132 and the second rib element 134 are plate shaped with constant thickness. The first rib element 132 and the second rib element 134 may be having a varying thickness from a bottom towards the end surface. By way of non-limiting example, the end surface 132a of the first rib element 132 is "V" shaped and the end surface 134a of the second rib element 134 is "M" shaped as shown in figures 1 and 3. It may be obvious to a person skilled in the art to provide any other shape for the end surface of the first rib element 132 and the second rib element 134.

In the present embodiment, a plurality of first rib elements 132 are configured on the second outer surface 114 and a plurality of second rib elements 134 are configured on the third outer surface 122. The plurality of first rib elements 132 are arranged parallelly to the impact line and parallel to each other. The rib elements are preferably arranged at equal distance therebetween in order to obtain homogeneous impact behaviour along the impact energy absorber 100. The distance between the rib elements 132 and 134 may be varied to vary the impact behaviour along the impact energy absorber 100, for example to vary the force needed to deform a predefined area of the impact energy absorber 100. Similarly, the plurality of second rib elements 134 are arranged parallelly to each other and parallel to the impact line. Here again it is preferred to have an equal distance therebetween. For each pair of a first rib element 132 and a corresponding second rib element 134 are arranged in line. More in particular, the plurality of the first rib elements 132 and the plurality of the second rib elements 134 are arranged relative to each other such that for an individual, set of first rib element 132 and corresponding second rib element 134 are arranged in line.

By way of non-limiting example, the plurality of first rib elements 132 are arranged perpendicular to a plane of the second wedge shaped part 120 and the plurality of second rib elements 134 are arranged perpendicular to a plane of the first wedge shaped part 110. More in particular the plurality of first rib elements 132 and second rib elements 134 may be arranged perpendicular to the first outer surface 112 and the fourth outer surface 124 respectively, for example such that the first rib element 132 and the second rib element 134 are parallel to the yz-plane as shown in figure 1.

Further, referring again to figure 2, the first hollow portion 140 of the first wedge shaped part 110 is provided with a plurality of lamellas 142. The first hollow portion 140 is at one side confined by a first inner surface 112a, wherein the first inner surface 112a is opposite to the first outer surface 112. At another side the first hollow portion 140 is confined by a second inner surface 114a, in which the second inner surface 114a is opposite to the second outer surface 114. The lamellas 142 are plate like structures arranged parallel to each other and parallel to the impact line and extending perpendicularly from the first inner surface 112a to the second inner surface 114a. Preferably, the lamellas 142 are thinner than the rib elements 132 and 134 or at least are constructed such that they deform on impact more easily than the rib elements 132 and 134. The distance between the individual lamellas may be the same as between the first rib elements 132 or between the second rib elements 134. The distance between the individual lamellas may also be different from the distance between the rib elements 132 and 134. Typically, the distance may be a few centimetres, for example 5 cm.

Similarly, the second hollow portion 150 of the second wedge shaped part 120 is provided with a plurality of lamellas 152 arranged parallel to each other and parallel to the impact line and extending perpendicularly from a third inner surface 122a to a fourth inner surface 124a. The second hollow portion 150 is at one side confined by the third inner surface 122a, wherein the third inner surface 122a is opposite to the third outer surface 122. At another side the second hollow portion 150 is confined by the fourth inner surface 124a, in which the fourth inner surface 124a is opposite to the fourth outer surface 124. In the present embodiment, the lamellas 142 and 152 are weaker than the first rib element 132 and the second rib element 134. It may be obvious to a person skilled in the art to change the strength of material used for the lamellas 142 and 152 and the rib elements 132 and 134. The lamellas 142 in the first hollow portion 140 may be in line with the lamellas 152 in the second hollow portion 150. Further, these lamellas 142 and 152 may be in line with the rib elements 132 and 134.

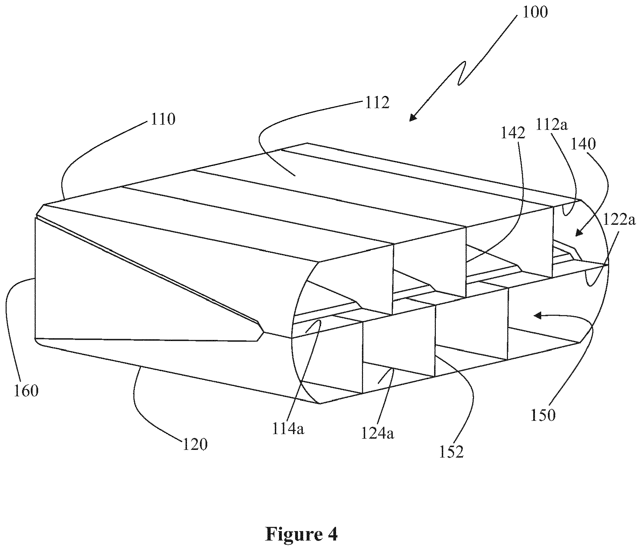

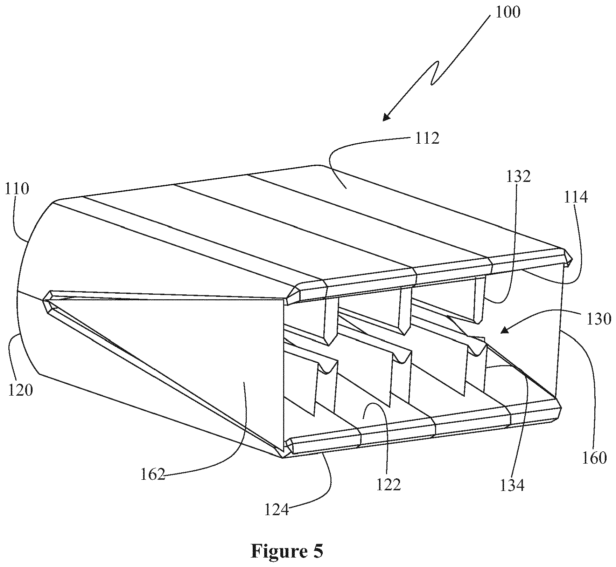

In a second embodiment as shown in figure 4 and 5, at least one lamella is configured on the wedge shaped opening 130. Specifically two lamellas 160 and 162 are arranged on the sides of the wedge shaped opening 130 constituting a side wall for the wedge shaped opening 130. The lamellas 160 and 162 adjoins with the second surface 114 and the third surface 122. In this embodiment, the lamellas 160 and 162 are triangular in shape. Each of the lamellas 160 and 162 may also be an extension of the side walls of the two wedge shaped parts, forming a joint side wall for both wedge parts. In such an embodiment, the lamellas 160 and 162 on the side may not be recognised as such visually.

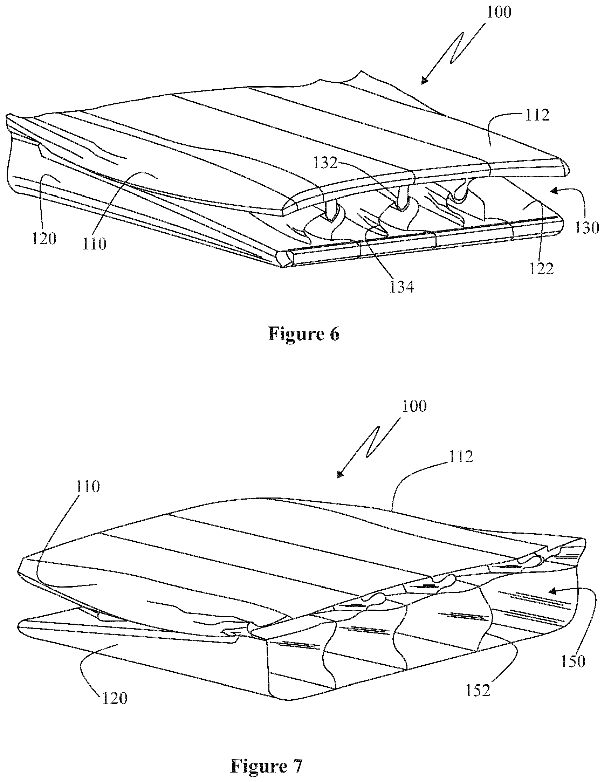

In an undeformed condition before an impact as shown in figure 1, the first rib element 132 and the second rib element 134 are having a distance therebetween. In a deformed condition as shown in figure 6 and 7, the first rib element 132 and the second rib element 134 engages with one another and deform thereafter depending upon force of impact. Specifically, the first rib element 132 and the second rib element 134 engage with one another in a deformed condition and the complementary end surfaces 132a and 134a of the first rib element 132 and the second rib element 134 meet with a positive fit. More specifically, the "V" shaped end surface 132a of the first rib element 132 engages with the "M" shaped end surface 134a of the second rib element 134 in the deformed condition with a positive fit. During the deformation, some or all corresponding first rib element 132 and the second rib element 134 may merge with each other such that after the impact they cannot be identified separately.

Similarly, the lamellas 142 and 152 configured on the hollow portions 140 and 150 of the first wedge shaped part 110 and the second wedge shaped part 120 absorbs the impact of collision thereby deforming the shape on impact of collision. After the collision, profile of the first surface 112 and the fourth surface 124 remains unchanged changing the profile of the wedge shaped opening 130. For example, the impact energy absorber 100 is configured on a side door panel of the vehicle with the first surface 112 facing outwards and the fourth surface 124 facing inwards with respect to the door panel, the first surface 112 upon impact moves closer to the fourth surface 124 and changes the profile of the wedge shaped opening 130 thereby deforming the shape on impact of collision. The material of the impact energy absorber 100 is a polymeric material for example PP or more in particular PP reinforced with glass fibres. It may be obvious to a person skilled in the art to use any other obvious material for the impact energy absorber 100.

Advantages of the present invention is to provide an impact energy absorber 100 for absorbing impact energy during collision of vehicle. The impact energy absorber 100 can protect an occupant during vehicle crashes. Further, the impact energy absorber 100 can absorb the crash force even in offset force. Moreover, the impact energy absorber 100 is easy to manufacture and simple in construction. Also, the impact energy absorber 100 is robust in construction.

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, and to thereby enable others skilled in the art to best utilize the present invention and various embodiments with various modifications as are suited to the particular use contemplated. It is understood that various omissions and substitutions of equivalents are contemplated as circumstances may suggest or render expedient, but such omissions and substitutions are intended to cover the application or implementation without departing from the scope of the claims of the present invention.

## Claims

1. An impact energy absorber (100) for absorbing an impact energy on a vehicle, the impact energy absorber comprising:
a first wedge shaped part (110) having a first outer surface (112) and a second outer surface (114);
a second wedge shaped part (120) having a third outer surface (122) and a fourth outer surface (124), and the first wedge shaped part (110) and the second wedge shaped part (120) are adjoined to form a wedge shaped opening (130) between the second surface (114) and the third surface (122), which second outer surface (114) and third outer surface (122) are facing each other;
wherein at least a first rib element (132) is arranged in the wedge shaped opening (130), the first rib element (132) extending parallel to an impact line from the second outer surface (114) in the direction of the third outer surface (124) along an impact line, and at least one second rib element (134) extending from the third outer surface (122) in the direction of the second outer surface (114) such that the second rib element (134) is in line with the first rib element (132) and wherein, in an undeformed condition, the first rib element (132) and the second rib element (134) are having a distance therebetween.

2. The impact energy absorber as claimed in claim 1, wherein the first rib element (132) having an end surface (132a) complementary to an end surface (134a) of the second rib element (134).

3. The impact energy absorber as claimed in claim 1 and 2, wherein the first rib element (132) and the second rib element engage (134) with one another in the deformed condition and the complementary end surfaces (132a,134a) of the first rib element (132) and the second rib element (134) meet with a positive fit.

4. The impact energy absorber as claimed in any one of claims 1 to 3, wherein a plurality of first rib elements (132) are configured on the second outer surface (114) and a plurality of second rib elements (134) are configured on the third outer surface (122).

5. The impact energy absorber as claimed in any one of claims 1 to 4, wherein the first wedge shaped part (110) and the second wedge shaped part (120) are hollow.

6. The impact energy absorber as claimed in claim 5, wherein the hollow portion (140) of the first wedge shaped part (110) is provided with a plurality of lamellas (142) arranged parallel to each other and parallel to the impact line and extending perpendicularly from a first inner surface (112a) to a second inner surface (114a), the hollow portion (150) of the second wedge shaped part (120) is provided with a plurality of lamellas (152) arranged parallel to each other and parallel to the impact line and extending perpendicularly from a third inner surface (122a) to a fourth inner surface (124a).

7. The impact energy absorber as claimed in any one of claims 1 to 6, wherein at least a lamella (160,162) is configured on a side of the wedge shaped opening constituting a side wall for the wedge shaped opening (130).

8. The impact energy absorber as claimed in claim 6 and 7, wherein the lamellas (142,152,160,162) are weaker than the rib elements (132,134).

9. The impact energy absorber as claimed in claim 2 or any claim depending from claim 2, wherein the complementary end surface (132a) of the first rib element (132) is "V" shaped and the complementary end surface (134a) of the second rib element (134) is "M" shaped such that the "V" shaped end surface (132a) engages with the "M" shaped end surface (134a) in a deformed condition with a positive fit.

## Patentansprüche

1. Aufprallenergieabsorber (100) zum Absorbieren einer Aufprallenergie auf einem Fahrzeug, wobei der Aufprallenergieabsorber Folgendes umfasst:
einen ersten keilförmigen Teil (110) mit einer ersten Außenfläche (112) und einer zweiten Außenfläche (114);
einen zweiten keilförmigen Teil (120) mit einer dritten Außenfläche (122) und einer vierten Außenfläche (124), und wobei der erste keilförmige Teil (110) und der zweite keilförmige Teil (120) miteinander verbunden sind, um eine keilförmige Öffnung (130) zwischen der zweiten Fläche (114) und der dritten Fläche (122) zu bilden, wobei die zweite Außenfläche (114) und die dritte Außenfläche (122) einander gegenüber liegen;
wobei mindestens ein erstes Rippenelement (132) in der keilförmigen Öffnung (130) angeordnet ist, wobei sich das erste Rippenelement (132) parallel zu einer Aufpralllinie von der zweiten Außenfläche (114) in der Richtung der dritten Außenfläche (124) entlang einer Aufpralllinie erstreckt und sich mindestens ein zweites Rippenelement (134) von der dritten Außenfläche (122) in der Richtung der zweiten Außenfläche (114) erstreckt, so dass das zweite Rippenelement (134) in einer Linie mit dem ersten Rippenelement (132) liegt, und wobei, in einem nicht verformten Zustand, das erste Rippenelement (132) und das zweite Rippenelement (134) einen Abstand dazwischen aufweisen.

2. Aufprallenergierabsorber nach Anspruch 1, wobei das erste Rippenelement (132) eine Endfläche (132a) aufweist, die komplementär zu einer Endfläche (134a) des zweiten Rippenelements (134) ist.

3. Aufprallenergierabsorber nach Anspruch 1 und 2, wobei das erste Rippenelement (132) und das zweite Rippenelement (134) miteinander im verformten Zustand eingreifen und die komplementären Endflächen (132a, 134a) des ersten Rippenelements (132) und des zweiten Rippenelements (134) formschlüssig aufeinandertreffen.

4. Aufprallenergierabsorber nach einem der Ansprüche 1 bis 3, wobei eine Vielzahl von ersten Rippenelementen (132) auf der zweiten Außenfläche (114) konfiguriert ist und eine Vielzahl von zweiten Rippenelementen (134) auf der dritten Außenfläche (122) konfiguriert ist.

5. Aufprallenergieabsorber nach einem der Ansprüche 1 bis 4, wobei der erste keilförmige Teil (110) und der zweite keilförmige Teil (120) hohl sind.

6. Aufprallenergieabsorber nach Anspruch 5, wobei der hohle Abschnitt (140) des ersten keilförmigen Teils (110) mit einer Vielzahl von Lamellen (142) ausgestattet ist, die parallel zueinander und parallel zur Aufpralllinie angeordnet sind und sich senkrecht von einer ersten Innenfläche (112a) zu einer zweiten Innenfläche (114a) erstrecken, der hohle Abschnitt (150) des zweiten keilförmigen Teils (120) mit einer Vielzahl von Lamellen (152) ausgestattet ist, die parallel zueinander und parallel zur Aufpralllinie angeordnet sind und sich senkrecht von einer dritten Innenfläche (122a) zu einer vierten Innenfläche (124a) erstrecken.

7. Aufprallenergieabsorber nach einem der Ansprüche 1 bis 6, wobei mindestens eine Lamelle (160, 162) auf einer Seite der keilförmigen Öffnung konfiguriert ist, die eine Seitenwand für die keilförmige Öffnung (130) darstellt.

8. Aufprallenergierabsorber nach Anspruch 6 und 7, wobei die Lamellen (142, 152, 160, 162) schwächer als die Rippenelemente (132, 134) sind.

9. Aufprallenergierabsorber nach Anspruch 2 oder jedem Anspruch, der von Anspruch 2 abhängt, wobei die komplementäre Endfläche (132a) des ersten Rippenelements (132) V-förmig ist und die komplementäre Endfläche (134a) des zweiten Rippenelements (134) M-förmig ist, so dass die V-förmige Endfläche (132a) mit der M-förmigen Endfläche (134a) in einem verformten Zustand formschlüssig eingreift.

## Revendications

1. Absorbeur d'énergie d'impact (100) pour absorber une énergie d'impact sur un véhicule, l'absorbeur d'énergie d'impact comprenant :
une première partie en forme de cale (110) ayant une première surface externe (112) et une deuxième surface externe (114) ;
une seconde partie en forme de cale (120) ayant une troisième surface externe (122) et une quatrième surface externe (124), la première partie en forme de cale (110) et la seconde partie en forme de cale (120) sont attenantes afin de former une ouverture en forme de cale (130) entre la deuxième surface (114) et la troisième surface (122), laquelle deuxième surface externe (114) et laquelle troisième surface externe (122) se font face ;
dans lequel au moins un premier élément de nervure (132) est agencé dans l'ouverture en forme de cale (130), le premier élément de nervure (132) s'étendant parallèlement à une ligne d'impact à partir de la deuxième surface externe (114) dans la direction de la troisième surface externe (124) le long d'une ligne d'impact, et au moins un second élément de nervure (134) s'étendant à partir de la troisième surface externe (122) dans la direction de la deuxième surface externe (114), de sorte que le second élément de nervure (134) est aligné avec le premier élément de nervure (132), et dans lequel, dans une condition non déformée, le premier élément de nervure (132) et le second élément de nervure (134) ont une distance entre eux.

2. Absorbeur d'énergie d'impact selon la revendication 1, dans lequel le premier élément de nervure (132) a une surface d'extrémité (132a) complémentaire d'une surface d'extrémité (134a) du second élément de nervure (134).

3. Absorbeur d'énergie d'impact selon les revendications 1 et 2, dans lequel le premier élément de nervure (132) et le second élément de nervure (134) se mettent en prise entre eux dans la condition déformée et les surfaces d'extrémité complémentaires (132a, 134a) d'un premier élément de nervure (132) et du second élément de nervure (134) se rencontrent avec un ajustement positif.

4. Absorbeur d'énergie d'impact selon l'une quelconque des revendications 1 à 3, dans lequel une pluralité de premiers éléments de nervures (132) sont configurés sur la deuxième surface externe (114) et une pluralité de seconds éléments de nervure (134) sont configurés sur la troisième surface externe (122).

5. Absorbeur d'énergie d'impact selon l'une quelconque des revendications 1 à 4, dans lequel la première partie en forme de cale (110) et la seconde partie en forme de cale (120) sont creuses.

6. Absorbeur d'énergie d'impact selon la revendication 5, dans lequel la partie creuse (140) de la première partie en forme de cale (110) est prévue avec une pluralité de lamelles (142) agencées parallèlement entre elles et parallèlement à la ligne d'impact et s'étendant perpendiculairement d'une première surface interne (112a) à une deuxième surface interne (114a), la partie creuse (150) de la seconde partie en forme de cale (120) est prévue avec une pluralité de lamelles (152) agencées parallèlement entre elles et parallèlement à la ligne d'impact et s'étendant perpendiculairement à partir d'une troisième surface interne (122a) jusqu'à une quatrième surface interne (124a).

7. Absorbeur d'énergie d'impact selon l'une quelconque des revendications 1 à 6, dans lequel :
au moins une lamelle (160, 162) est configurée sur un côté de l'ouverture en forme de cale constituant une paroi latérale pour l'ouverture en forme de cale (130).

8. Absorbeur d'énergie d'impact selon les revendications 6 et 7, dans lequel les lamelles (142, 152, 160, 162) sont plus fragiles que les éléments de nervures (132, 134).

9. Absorbeur d'énergie d'impact selon la revendication 2 ou l'une quelconque des revendications dépends de la revendication 2, dans lequel la surface d'extrémité complémentaire (132a) du premier élément de nervure (132) est en forme de « V » et la surface d'extrémité complémentaire (134a) du second élément de nervure (134) est en forme de « M » de sorte que la surface d'extrémité (132a) en forme de « V » se met en prise avec la surface d'extrémité (134a) en forme de « M » dans une condition déformée avec un ajustement positif.
